# EUROPÄISCHE PATENTSCHRIFT

(11) **EP 2 737 301 B1**
(45) Veröffentlichungstag und Bekanntmachung des Hinweises auf die Patenterteilung: **21.11.2018**
(21) Anmeldenummer: 12738034.3
(22) Anmeldetag: 07.07.2012
(51) Int. Cl.: G01N 21/88, G01N 21/90

(54) **INSPEKTIONSEINHEIT**
INSPECTION UNIT
UNITÉ D'INSPECTION

(30) Priorität: 28.07.2011 DE 102011108754
(43) Veröffentlichungstag der Anmeldung: 04.06.2014
(73) Patentinhaber: KHS GmbH, 44143 Dortmund (DE)
(72) Erfinder: PRECKEL, Katrin, 45892 Gelsenkirchen (DE); NICK, Michael, 44147 Dortmund (DE); VAN DE WYNCKEL, Werner, B-1851 Humbeek (BE)
(86) Internationale Anmeldenummer: PCT/EP2012/002875
(87) Internationale Veröffentlichungsnummer: WO 2013/013771

(56) Entgegenhaltungen:
- US-A- 5 987 159
- US-B1- 6 448 549
- WIKIPEDIA: "Scalable Link Interface", INTERNET CITATION, 11. April 2012 (2012-04-11), Seiten 1-6, XP007921142, Gefunden im Internet: URL:http://de.wikipedia.org/w/index.php?ti tle=Scalable_Link_Interface [gefunden am 2012-10-10]

## Beschreibung

### Technisches Gebiet

Die vorliegende Erfindung betrifft eine Vorrichtung zur Inspektion von Behältern sowie ein Verfahren zur Inspektion.

### Hintergrund der Erfindung

Die Beschriftung oder Bedruckung von Behältern erfolgt in der Regel nicht direkt auf den Behältern, sondern indirekt durch Anbringen von bereits bedruckten Etiketten. Die konventionellen, vorgedruckten Etiketten durchlaufen mehrere Produktionsschritte. So werden zunächst Etiketten mit Teststreifen gedruckt, anhand derer die Druckqualität der gesamten Gütermenge eines zusammenhängenden Produktionsprozesses (Charge) gesichert überprüft werden kann.

Erst im Folgeschritt werden die Einzeletiketten zugeschnitten und auf die Flasche aufgetragen.

Etiketten direkt bedruckter Behälter bieten gegenüber geklebten, vorgedruckten Etiketten Flexibilität in den Gestaltungsmöglichkeiten, beispielsweise bei schnellen Produktumstellungen, Markteinführungen und Sonderauflagen oder personifizierten Produktlösungen. Direkt bedruckte Flaschen werden "just-insequence" produziert. Es entfallen Zwischenschritte, in denen Fehler für gesamte Produktfolgen ausgeschlossen werden können. Durch die direkte Bedruckung von Behältern kann das Layout der Bedruckung von Behälter zu Behälter variiert werden, weshalb die Fehleranalyse zusätzlich auf wechselnde Designvorlagen ausgelegt sein muss.

Es wäre daher wünschenswert, mittels einer Vorrichtung zur Inspektion und eines Verfahrens zur Inspektion möglichst schnell und effizient defekte Behälter orten zu können, um dann möglichst schnell den defekten Behälter aus dem Produktionsprozess entfernen zu können.

Ein Verfahren zum Bestimmen eines Defekts in einer teilweise durchsichtigen Umhüllung, bspw. in einem Etikett für eine Flasche, ist aus der Druckschrift US 5 987 159 A bekannt. Dabei ist vorgesehen, dass die Umhüllung mit einer graphischen Information bedruckt ist, wobei aus einem Bereich einer Oberfläche der Umhüllung über einen ersten Lichtkanal ein erstes digitales Bild und über einen zweiten Lichtkanal ein zweites digitales Bild erstellt wird. Durch Vergleich dieser beiden digitalen Bilder ist es möglich, einen eventuell vorhandenen Defekt in der Umhüllung nachzuweisen.

Ein Verfahren zum Prüfen einer Flasche mit einem Gewindeabschnitt auf einen Gewindedefekt ist in der Druckschrift US 6 448 549 B1 beschrieben. Hierbei werden von der Flasche Videobilder erfasst, die unterschiedliche Abschnitte des Gewindeabschnitts enthalten. Weiterhin werden Pixel eines Videobilds verarbeitet, um Defekte in dem Gewindeabschnitt zu identifizieren.

### Zusammenfassung der Erfindung

Dazu schlägt die vorliegende Erfindung ein Verfahren gemäß Patentanspruch 1 vor, das eine schnelle Inspektion eines Behälters während des Produktionsprozesses ermöglicht. Ferner werden eine entsprechende Vorrichtung gemäß Patentanspruch 6 und ein Computerprogrammprodukt gemäß Patentanspruch 13 mit Programmcodemitteln, die auf einem computerlesbaren Datenträger gespeichert sind und welche eine Realisierung eines erfindungsgemäß vorgeschlagenen Verfahrens gemäß Patentanspruch 14 zur effektiven Inspektion eines Behälters ermöglichen, vorgeschlagen.

Die abhängigen Ansprüche beschreiben jeweils weitere Details zu möglichen Ausführungsformen des vorgeschlagenen Verfahrens bzw. der vorgeschlagenen Vorrichtung.

Gemäß einer Ausführungsform der erfindungsgemäßen Vorrichtung zur Inspektion von Behältern umfasst diese mindestens ein Speichermodul für SOLL-Bilder, mindestens eine optische Erfassungseinheit zur Erzeugung von IST-Bildern mindestens eines zu inspizierenden Behälters und eine Auswerte- und Steuereinheit, wobei die Auswerte- und Steuereinheit mindestens einen Hauptprozessor und mindestens eine Grafikkarte umfasst. Dabei umfasst die mindestens eine Grafikkarte mindestens zwei Grafikprozessoren und unterstützt Graphikkartenprogrammierung zur Auslagerung von zu einem Vergleich von IST- mit SOLL-Bildern gehörenden Berechnungen auf die mindestens zwei Grafikprozessoren.

GPGPU, vom Englischen für Allzweck-Berechnung auf Grafikprozessoreinheit(en) ("General Purpose Computation on Graphics Processing Unit"), bezeichnet die Verwendung eines Grafikprozessors für Berechnungen über seinen ursprünglichen Aufgabenbereich hinaus. Dies können beispielsweise Berechnungen zu technischen oder wirtschaftlichen Simulationen sein. Bei parallelen Algorithmen kann so eine enorme Geschwindigkeitssteigerung im Vergleich zum Hauptprozessor erzielt werden.

GPGPU ist aus den Shadern der Grafikprozessoren hervor gegangen. Shader, auch Schattierer genannt, sind Hardware- oder Software-Module, die bestimmte Rendering-Effekte bei der 3D-Computergrafik implementieren. Die Stärke liegt im gleichzeitigen Ausführen gleichförmiger Aufgaben, wie dem Einfärben von Pixeln oder der Multiplikation großer Matrizen. Da der Geschwindigkeitszuwachs moderner Prozessoren nicht mehr durch die Erhöhung des Taktes zu erreichen ist, ist die Parallelisierung ein wichtiger Faktor zum Erreichen höherer Rechenleistungen moderner Computer. Der Vorteil der Verwendung der GPU gegenüber der CPU liegt in der höheren Rechenleistung und der höheren Speicherbandbreite. Die Geschwindigkeit wird hauptsächlich durch den hohen Grad an Parallelität der Rechenoperationen des Grafikprozessors erreicht.

Für die Entwicklung GPGPU-fähiger Programme stehen vor allem "Open Computing Language" (OpenCL) und "Compute Unified Device Architecture" (CUDA) zur Verfügung. OpenCL ist ein offener Standard, der auf vielen Plattformen zur Verfügung steht. CUDA dagegen ist ein proprietäres "Framework" oder Ordnungsrahmen von Nvidia™ und auch nur auf GPUs dieses Herstellers lauffähig. Um Programme auf einer GPU auszuführen benötigt man ein Hostprogramm, das die Steuerung des Informationsflusses übernimmt. Meist wird zur Laufzeit der in einer C-ähnlichen Sprache formulierte GPGPU-Code auf Anweisung des Hostprogrammes kompiliert und an den Grafikprozessor zur Weiterverarbeitung gesandt, der dann die errechneten Daten an das Hostprogramm zurückgibt.

Gemäß einer weiteren Ausführungsform der erfindungsgemäßen Vorrichtung ist die mindestens eine optische Erfassungseinheit eine optische Kamera.

Gemäß einer weiteren Ausführungsform der erfindungsgemäßen Vorrichtung ist die mindestens eine optische Kamera eine Zeilenkamera ist.

Gemäß einer weiteren Ausführungsform der erfindungsgemäßen Vorrichtung bedient die Auswerte- und Steuereinheit mehrere optische Erfassungseinheiten gleichzeitig.

Gemäß einer weiteren Ausführungsform der erfindungsgemäßen Vorrichtung umfasst diese mindestens eine Bildfangschaltung zur Datenakquise und Vorverarbeitung von Daten von der mindestens einen optischen Erfassungseinheit. Die Bildfangschaltung, so genannte "Framegrabber", ist eine Hardwarekomponente, welche zur Ansteuerung der mindestens einen Kamera bzw. der optischen Erfassungseinheit dient. Bei der prozessorseitigen Ansteuerung kommt es bei hohen Abtastfrequenzen zu Qualitätsverlusten am erzeugten Bild. Der Vorteil besteht bei der vorgenannten Bildfangschaltung gegenüber prozessorseitiger Ansteuerung darin, dass hierbei keine Verzögerungen durch parallel ausgeführte Prozesse entstehen bzw. diese vermieden werden.

Gemäß einer weiteren Ausführungsform der erfindungsgemäßen Vorrichtung durchläuft der mindestens eine zu inspizierende Behälter mit einem zu untersuchenden Merkmal einen Verfahrweg, der dem Verfahrweg zur Erzeugung des zu untersuchenden Merkmals gleicht.

Gemäß einer weiteren Ausführungsform der erfindungsgemäßen Vorrichtung sind die mindestens eine optische Erfassungseinheit und eine Bewegung des Behälters in der Vorrichtung synchronisiert.

Gemäß einer Ausführungsform des erfindungsgemäßen Verfahrens werden zur Inspektion von Behältern zunächst Bilddaten mindestens eines zu inspizierenden Behälters als IST-Bilder mittels mindestens einer optischen Erfassungseinheit einer Inspektionseinheit erfasst und an eine Auswerte- und Steuereinheit der Inspektionseinheit geleitet, welche die IST-Bilder mit SOLL-Bildern vergleicht. Dabei umfasst die Auswerte- und Steuereinheit mindestens einen Hauptprozessor und mindestens eine Graphikkarte, wobei ein Vergleich von IST- mit SOLL-Bildern auf der mindestens einen Graphikkarte erfolgt und zum Vergleich gehörenden Berechnungen durch mindestens zwei Graphikprozessoren der Graphikkarte parallelisiert erfolgen und die Graphikkarte die ausgewerteten Daten an den mindestens einen Hauptprozessor leitet. Der Hauptprozessor leitet anschließend die ausgewerteten Daten an eine zentrale Steuerung weiter, die mit einer Behandlungs-/Ausschleusungseinheit verbunden ist.

In einer weiteren Ausführungsform des erfindungsgemäßen Verfahrens werden IST-Bilder und SOLL-Bilder, insbesondere Bildformate unterschiedlicher Bilddimensionen, angeglichen, insbesondere eindimensional, sowie zweidimensional gestreckt, gestaucht, verschoben, entzerrt, verzerrt, und anschließend überlagert.

In einer Ausführungsform des erfindungsgemäßen Verfahrens werden Farbwerte von IST- Bildern ermittelt und durch die Auswerte- und Steuereinheit angelernt und es erfolgt eine Umrechnung von SOLL-Farbwerten zu IST-Farbwerten. Hintergrund hierbei ist, dass durch die Umrechnung der Bilddaten RGB in CMYK wird der Farbraum des Origialbildes verfälscht. Durch das Einlesen der Bilddaten mittels einer optischen Erfassungseinheit unter Verwendung mindestens einer Beleuchtungseinheit, insbesondere der Verwendung von weißem LED Normlicht, wird der Farbraum ebenfalls verfälscht. Es ist daher vorteilhaft, wenn das System Umrechnungsvorschriften von IST- und SOLL-Farbwerten generiert.

In einer Ausführungsform des erfindungsgemäßen Verfahrens wird eine Farbtonverarbeitung auf IST- und SOLL- Bildern zur Farbversatzdetektion angewandt.

In einer Ausführungsform des erfindungsgemäßen Verfahrens werden IST-Bilder und SOLL-Bilder als Gitter aufgeteilt und ein oder mehrere Rasterelemente des IST-Bildes werden von jeweils einem der mindestens zwei Graphikprozessoren der Grafikkarte mit dem oder den analogen Rasterelementen des SOLL-Bildes verglichen.

Ein weiterer Aspekt der Erfindung ist ein Computerprogrammprodukt mit Programmcodemitteln, die auf einem computerlesbaren Datenträger gespeichert sind, um alle Schritte des hier beschriebenen Verfahrens durchzuführen, wenn das Computerprogramm auf einem Computer oder einer entsprechenden Recheneinheit ausgeführt wird.

Ein weiterer Aspekt der Erfindung ist die Verwendung des erfindungsgemäßen Verfahrens, bei dem die direkte Bedruckung eines Behälters im direkten Anschluss an den Bedruckungsprozess überprüft wird.

Weitere Einzelheiten und Vorteile der Erfindung ergeben sich aus den nachfolgenden Beschreibungen von Ausführungsformen der Erfindung und der entsprechenden Zeichnung.

Die Erfindung ist anhand eines Ausführungsbeispiels und zwei Zeichnungen schematisch dargestellt und wird im Folgenden unter Bezugnahme auf die Zeichnungen ausführlich beschrieben.

### Kurze Beschreibung der Zeichnung

Figur 1 zeigt schematisch den Aufbau einer Direktbedruckungsmaschine.
Figur 2 zeigt schematisch eine Ausführungsform einer erfindungsgemäßen Inspektionseinheit.

### Detaillierte Beschreibung der Zeichnung

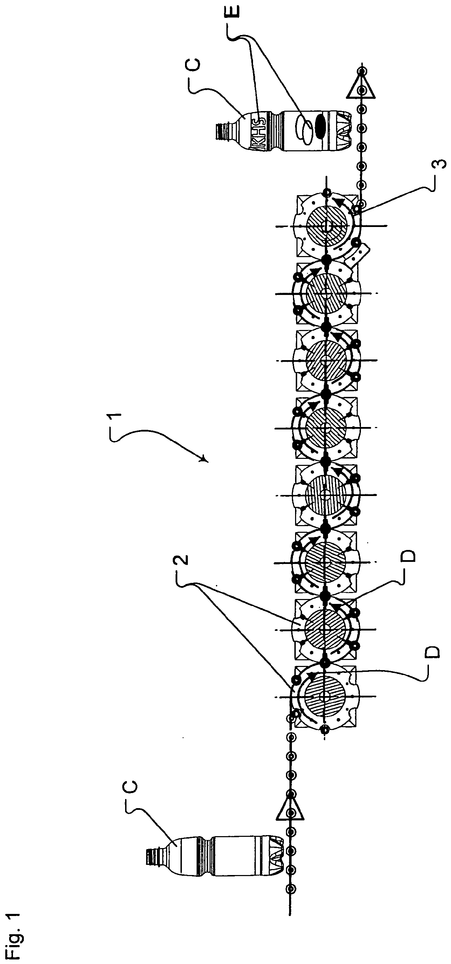

Eine Direktbedruckungsmaschine 1 von beispielsweise PET Flaschen C ist in Figur 1 gezeigt. Sie besteht aus mehreren Modulen 2 in Sternform, die in der Regel jeweils eine Direktdruckeinheit pro Farbe, eine Applikation eines Behandlungsfluids oder speziellen Behandlungsschritt, wie bspw. finales Trockenen und/oder Härten der applizierten Fluide darstellen. Jedes Modul 2 erfüllt dabei eine oder auch mehrere Funktionen. Mit den Pfeilen D ist die Umlaufrichtung der Module 2 angedeutet. Die Flasche wird nach jedem Arbeitsschritt eines Moduls 2 an ein entsprechend nachfolgendes Modul 2 übergeben und dort weiter verarbeitet bzw. bedruckt. Die Direktbedruckungsmaschine 1 kann somit als eine Kette von Sternmodulen 2 dargestellt werden. Ein Inspektionsmodul 3 ist als letztes Modul dieser Kette vorgesehen, und somit ebenso als Sternmodul ausgebildet, wobei das Inspektionsmodul 3 auch mehrfach innerhalb der Direktbedruckungsmaschine vorgesehen sein könnte.

Die Auslegung der einzelnen Module 2 in Sternform ermöglicht eine "just-in-sequence"-Bearbeitung der Flaschen. Jedes Sternmodul 2 enthält bis zu 12 Taschen, in die jeweils eine Flasche aufgenommen und in Flaschentransportrichtung, d.h. in Pfeilrichtung, mitgeführt wird. So kann der Bearbeitungsprozess teilparallelisiert (pipelined) ausgeführt werden.

Während sich das Sternmodul 2 für den außenstehenden Betrachter dreht, befinden sich die 12 Taschen in einem statischen Bezugssystem zur aufgenommenen Flasche. Erst dieser Umstand ermöglicht eine hochpräzise Bearbeitung, wie sie sowohl beim Druck als auch der Inspektion notwendig ist.

Das Inspektionsmodul 3 agiert autonom in der Analyse und Bewertung von Etiketten direkt bedruckter Flaschen. Darüber hinaus ist die Ausgabe an einen Kontrollmonitor und/oder an eine Benutzerschnittstelle der Gesamtmaschine möglich. Ebenfalls lassen sich Aufzeichnungen von Defekten zu Dokumentationszwecken beispielsweise auf einem Server ablegen. Dazu steht das Inspektionsmodul 3 in Kommunikationskontakt mit einer entsprechenden Anzeigeeinheit und Speichereinheit.

Das Inspektionsmodul 3 wird als Stern mit bis zu 12 Taschen, die jeweils eine Inspektionseinheit enthalten, konzipiert. Da ein stop-and-go-Betrieb bei einer Maschinenleistung von 36000 Flaschen/h im direkten Anschluss an eine Streckblasmaschine ohne Puffer ausgeschlossen ist, eignet sich die Sternform, um bis zu 12 Flaschen parallel zu untersuchen. Die Inspektionseinheiten folgen auf dem Inspektionsmodul 3 der jeweiligen zugehörigen Flasche in Transportrichtung und ermöglichen so die notwendige Untersuchungszeit.

Die Flasche wird dazu über einen Puck dem Sternmodul 3 zugeführt und etwa 270° (U_{Stern} = 60 U/min) mitgeführt. Die Flasche befindet sich also 0,7 Sekunden lang im Inspektionsmodul 3, was der Gesamtzeit des Untersuchungsprozesses entspricht.

Während sich das Inspektionsmodul 3 für den äußeren Betrachter dreht, befinden sich die aufgenommenen Flaschen und die zugehörigen Inspektionseinheiten in einem statischen Bezugssystem. Erst dieser Umstand ermöglicht es, die Flasche mit dem direkt bedruckten Etikett ohne Verwischen einzulesen, wie es beispielsweise bei an einem Kamerasystem vorbeifahrenden Flaschen der Fall wäre.

In jeder der 12 Taschen des Inspektionsmoduls 3 befindet sich eine Inspektionseinheit. Eine Inspektionseinheit liest das direkt gedruckte Etikett auf der zugehörenden Flasche ein und speichert dieses zur weiteren Verarbeitung auf einer in der Inspektionseinheit befindlichen Speichereinheit.

Um das Inspektionsmodul 3 in den Gesamtprozess der Direktdruckmaschine integrieren zu können, muss die Leistung an die Parameter der Gesamtmaschine, wie beispielsweise Flaschendurchsatz, Schnittstellen zwischen einzelnen Modulen, Flaschenhandling und Qualitätsstandards, angepasst werden.

Nach der Zuführung der Flasche in die Direktdruckmaschine 1 wird die Flasche über einen Puck transportiert und ausgerichtet. Dieser Puck durchfährt mit der Flasche sämtliche Sternmodule 2 der Direktdruckmaschine 1 und dient als Flaschendrehantrieb zur Rundumbedruckung, -durchhärtung und -vermessung der gedruckten Etiketten.

Sobald der Puck in eine Inspektionseinheit des Inspektionsmoduls aufgenommen wird, kann das Etikett über eine optische Erfassungseinheit digitalisiert werden (IST-Bild). Diese kann eine optische Kamera, insbesondere eine Zeilenkamera sein. Durch Verwendung einer Zeilenkamera, die zeilenweise die Flaschenoberfläche einliest, werden Verzerrungen und Unschärfe beim Einlesen des Etiketts minimiert. Dazu dreht der Puck, der die Flasche führt, selbige vor der aufzeichnenden Kamera.

In einer nicht gezeigten Variante, bei welcher das Druckbild E auf einer Druckmaschine erzeugt wird, bei der mehrere oder alle Farben und Fluide auf einem umlaufenden Stern oder mitlaufenden Schlitten appliziert werden, wird das Inspektionsmodul 3 in analoger Weise zur beschriebenen Vorrichtung bzw. dem Verfahren angeordnet und betrieben.

Um bereits nach 0,5 s, also nach einer halben Drehung des Sternmoduls - das Etikett der Flasche über ihren kompletten Umfang eingelesen zu haben, muss der Puck eine Drehzahl U_{Puck} ≥ 2 U/s unterstützen.

Ein weiterer wichtiger Punkt ist die erforderliche Auflösung des IST-Bildes. Ein möglicher Druckkopf, XAAR 1001, druckt mit einer Punktdichte von 36 dpi, was einem Punktabstand von 70,5 µm entspricht. Um somit ein beispielsweise 70 mm hohes Etikett einlesen zu können, bedarf es beispielsweise bei einer Farbzeilenkamera mit einer Auflösung von mindestens 1.365 Pixeln pro Zeile.

Diese und höhere Auflösungen sind für die Fehlerdetektion im Druckbild unerlässlich, da beispielsweise vereinzelt ausfallende Druckdüsen bei einer Druckauflösung von 360 dpi bereits im Bereich von 70,5 µm liegen.

Bezogen auf ein 70 mm hohes Etikett ergibt die maximale Auflösung einen Bildpunktabstand von 51,3 µm, einzelne gedruckte Bildpunkte werden somit detektiert. Eine maximale Abtastfrequenz von fₛ = 14 kHz ermöglicht es, in einer halben Sternmodulumdrehung (f_{read} = 0,5 s) das Etikett in 7.000 Zeilen einzulesen. Es ergibt sich also eine maximale effektive Bildauflösung von 1.365 x 7.000 Pixeln bereits unter Verwendung einer Zeilenkamera mit geringer Auflösung. Sofern lediglich Fehler detektiert werden sollen, die das menschliche Auge deutlich wahrnehmen kann, genügt eine Auflösung von 1.024 x 2.250 Pixeln.

Die pro Bild erzeugten Datenmengen von 14,3 MB in 0,5 s werden über eine Gigabit Ethernet Verbindung, beispielsweise GigE Vision, an einen in der Inspektionseinheit befindlichen Rechner übertragen, da hierfür eine sehr hohe Datenrate (R = 28,67 MB/s) notwendig ist. Die planen IST-Bilder des gedruckten Etiketts stehen nun der Bildverarbeitung zur Verfügung.

Um Synchronisation zwischen der verwendeten Zeilenkamera und der Drehbewegung der jeweiligen Flasche herzustellen, wird die Zeilenkamera durch einen Mikrocontroller getriggert, der seine Impulse von einem Encoder des Flaschenantriebs im jeweiligen Puck erhält. So ist gewährleistet, dass bei jedem Iterationsschritt der Flaschendrehung eine weitere Zeile des Etiketts eingelesen wird. Darüber hinaus kann eine Bildfangschaltung (Framegrabber) als Hardwarekomponente eingesetzt werden, die die verwendete Kamera prozessorunabhängig ansteuert.

Fehler, die im Druckprozess auftreten können, sind beispielsweise Verschmutzung, Kratzer durch Reibung zwischen Flasche und Maschinenteilen, Versatz einer Druckfarbe, vereinzelt ausfallende Druckkopfdüsen sowie der Totalausfall einzelner Druckköpfe. Hierbei kann es sich um systematische Fehler, die durch fehlerhafte Einstellung hervorgerufen werden, aber auch um statistische Fehler handeln.

Darüber hinaus stellt sich an eine Direktdruckanwendung der Anspruch an ständig wechselnde Druckbilder/Motive. Eine übliche Inspektionseinheit, die auf ein Format/Design angelernt wird, kann in diesem Fall nicht eingesetzt werden. Es ist notwendig, das digitalisierte Abbild des Digitaldrucks mit seiner Quelldatei zu vergleichen.

Um die möglichen Fehler detektieren zu können, können folgende Verfahren und Algorithmen eingesetzt werden.

Überlagerung. Das eingelesene, plane Abbild des gedruckten Etiketts (IST-Bild) wird auf die Größe der Quelldatei gestaucht und mit dieser überlagert. Durch Subtraktion erhält man größere Ungleichheiten wie beispielsweise Verschmutzung oder grobe Kratzer und Schleifspuren.

Farbtonverarbeitung. Farbtonverarbeitung hebt eine bestimmte enthaltene Farbe hervor. So kann das zu untersuchende IST-Bild in seine Farbkomponenten Cyan, Magenta, Gelb, s/w zerlegt werden. Somit ist es möglich, einen Farbversatz zwischen einzelnen Farbkomponenten (color offset) zu detektieren.

Mustererkennung. (Vereinzelt) ausfallende Düsen des Druckkopfs zeichnen sich durch eine feine Linie im Druckbild ab. Diese gilt es durch Mustererkennungsalgorithmen ausfindig zu machen und mit dem Referenzbild (SOLL-Bild) zu überlagern, so dass nicht im IST-Bild enthaltene Linien als Fehler erkannt werden.

Die Bildverarbeitung beinhaltet häufiges Verrechnen vieler großer Matrizen, entsprechend der Bilddimensionen in Pixel, aufgeteilt in R (Rot), G (Grün) und B (Blau). Viele dieser Rechenoperationen werden elementweise vorgenommen und können daher parallelisiert werden.

Mit Hilfe beispielsweise der CUDA Technologie ist es möglich, Berechnungen und Programme auf die Grafikkarte auszulagern und dort auf einem Multiprozessorsystem parallel auszuführen. Heutige Grafikkarten beinhalten mehrere Hundert bis zu mehreren Tausend Multiprozessoren, die parallel Berechnungen vornehmen können, wodurch die Berechnungszeit deutlich verkürzt wird.

Eine elementweise Durchführung einer Instruktion, beispielsweise eine Subtraktion zur Differenzbildung, benötigt mittels verschachtelter Schleifendurchläufe auf einer CPU 2877000 Instruktionen, die sequenziell abgearbeitet werden. Bei einem aktuellen Prozessor, beispielsweise Intel™ Core i7 980XE mit 107,55 GFLOPS (10⁹ Fließkommaoperationen pro Sekunde), ergibt sich allein hierfür eine theoretische Rechenzeit von 26 Mikrosekunden - parallel auf der CPU laufende Prozesse nicht beachtet.

Lagert man diese Berechnung auf eine Grafikkarte mit beispielsweise 480 Graphikprozessoren aus, so wird das zu verarbeitende Bild in ein Gitter ("grid") unterteilt, was der Anzahl verfügbarer Multiprozessoren entspricht. Diese führen dann jeweils eine Instruktion parallel aus, sodass jeder Graphikprozessor 5.994 Instruktionen abarbeiten muss. Bei einer Leistung von 1,03 TFLOPS (Trillion Floating Point Operations Per Second) ergibt sich eine theoretische Rechenzeit von 2,793 Mikrosekunden.

Nicht jede Operation kann effektiv auf das Multiprozessorsystem der Grafikkarte ausgelagert werden. Handelt es sich um Prozesse, die sequenziell abgearbeitet werden müssen, ist die Performance auf der CPU deutlich besser. Aus diesem Grunde ermöglicht die CUDA Technologie ein Co-processing zwischen CPU und GPU.

Die Arbeitsabläufe können unterschiedlich angeordnet werden.

Zum einen können Arbeitsabläufe sequentiell verarbeitet werden. Nach der Aufnahme der Flasche in das Inspektionsmodul (U_{Stern} = 1,0 s) wird in den ersten 500 ms das Etikett der gedruckten Flasche eingelesen und im Grafikspeicher (Framebuffer) der Graphikkarte (GPU) gespeichert. Im Anschluss stehen dann weitere 250 ms zur Bildsignalverarbeitung, die Komprimierung, Formatierung, Mustererkennung umfasst, zur Verfügung. So ergibt sich pro Inspektionseinheit eine Prozesszeit von 750 ms.

Zum anderen können Arbeitsabläufe parallel verarbeitet werden (Pipelining). Nach der Aufnahme einer Flasche in das Inspektionsmodul wird in der vollen Transportzeit von 750 ms die Flasche eingelesen. Im Pipelining-Verfahren wird bereits eine weitere Flasche gescannt, während parallel die Bildverarbeitung der vorherigen Flasche durchgeführt wird. Dafür stehen 1.250 ms zur Verfügung. So ergibt sich pro Inspektionseinheit eine Prozesszeit von 2.000 ms. Welcher Prozess besser geeignet ist, hängt vom Zeitbedarf der Datenakquisition und der Bildverarbeitung der jeweiligen Gesamtmaschine ab.

Anschließend kann das Ergebnis der Bildauswertung über einen Schleifkontakt mittels Ethernet- oder VGA Schnittstelle an ein Benutzerinterface der Gesamtmaschine oder an Kontrollmonitore ausgegeben werden. Detektierte Fehler können zum Großteil auf bestimmte Ursachen zurückgeführt werden. Dies ermöglicht eine individuelle Behandlung dieser Fehlerfälle. Inwiefern auf diese Fehler reagiert wird, hängt sowohl vom Fehlertyp als auch vom Maschinendesign und FlaschenHandling der Gesamtmaschine ab.

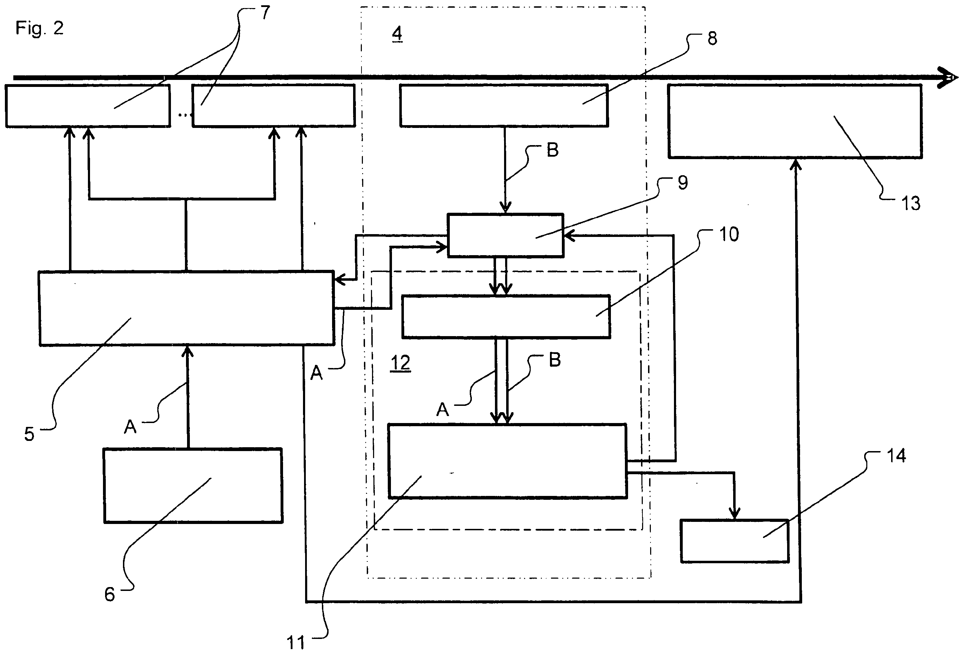

Figur 2 fasst die Merkmale der erfindungsgemäßen Inspektionseinheit 4 und des erfindungsgemäßen Verfahren zusammen. Eine zentrale Steuerung 5 einer Direktbedruckungsanlage ist mit einem Bildspeicher 6, der die SOLL-Bilder A beinhaltet, verbunden und steuert Druckmodule 7 zur direkten Bedruckung von Behältern, beispielsweise Flaschen. Nach dem Bedruckungsprozess gelangt eine bedruckte Flasche in die Inspektionseinheit 4, in der zunächst eine RGB Zeilenkamera 8 ein IST-Bild B der Flasche aufnimmt und an einen Hauptprozessor 9 der Inspektionseinheit 4 weiterleitet. Dieser leitet über einen Bildspeicher 10 das von der Zeilenkamera 8 stammende IST-Bild B sowie das entsprechende von der zentralen Steuerung 5 stammende SOLL-Bild A an das Multiprozessorsystem 11 der Graphikkarte 12 weiter. Hier werden IST-Bild B und SOLL-Bild A ausgewertet bzw. verglichen. Anschließend wird das Ergebnis der Auswertung an den Hauptprozessor 9 und weiter an die zentrale Steuerung 5 geleitet, welche je nach Ergebnis der Auswertung die inspizierte Flasche zur Weiterbehandlung freigibt oder durch ein entsprechendes Signal an eine Ausschleusungseinheit 13 von der Produktionslinie entfernt. Die Inspektionseinheit 4 ist außerdem über die Graphikkarte 12 mit einem Bildschirm 14 verbunden.

Die Inspektionseinheit 4 kann dabei bspw. mit einem leistungsstarken Zentralrechner, der auf dem Sternmodul bei 60 U/min mitfährt, oder alternativ kann jede Tasche mit einem mitfahrenden Rechner versehen werden.

Als kostengünstige Alternative könnten auch ein oder mehrere Zentralrechner außerhalb des Drehmoduls angeordnet werden, bei geeigneter Übertragung der Daten.

Die Vorteile des erfindungsgemäßen Inspektionsmoduls gegenüber konventionellen Konzepten lassen sich folgendermaßen zusammenfassen:
Die Entwicklung eines Inspektionsmoduls in Sternform zur Inspektion direkt bedruckter, dreidimensionaler Objekte beinhaltet mehrere Vorteile: Ein Inspektionsmodul enthält mehrere Inspektionseinheiten, die entsprechend der Druckbilderzeugung (teil-)parallelisiert aufgenommene Untersuchungsobjekte verarbeiten können (Pipelining). Dies ermöglicht eine sehr hohe Maschinenleistung, eine optimale Auslastung und eine größtmögliche Bearbeitungszeit.

Im Inspektionsmodul befindliche Inspektionseinheiten stellen ein statisches Bezugssystem zu den zu untersuchenden Behältern her, da sie sich in der Transportrichtung der zu untersuchenden Objekten mitbewegen. Durch diesen Umstand gewinnt das Maschinenkonzept die notwendige Präzision, um bei einer Punktdichte von bis zu 600 dpi und höher Produktionsfehler detektieren zu können.

Der Objekttransport und die Logistik im Inspektionsmodul entsprechen dem Transport und der Logistik im Druckprozess. Durch diesen Umstand wird sich die Zeilenkamera analog zu einem Druckkopf verhalten; anstatt ein Druckbild zu erzeugen, liest sie ein digitales Abbild des Druckbildes (IST-Bild) ein. Jede Objektform, die direkt bedruckt werden kann, wird somit in einem identischen Verfahrweg inspiziert. Des weiteren bietet sich der Aspekt der Rückverfolgbarkeit, um als defekt detektierte Flaschen zu einem beliebigen Zeitpunkt dem Prozess entziehen zu können.

Zur Erzeugung der Bilddaten wird bevorzugt eine Zeilenkamera verwendet. Sie schafft Unabhängigkeit zur Formgebung direkt bedruckter Objekte, in Bezug auf Bildverzerrung, Tiefenschärfe, und die oben genannte Analogie zur Druckkopfpositionierung. Jedes Objekt, das industriell direkt bedruckt wird, kann somit inspiziert werden.

Mittels Grafikkartenprogrammierung können Berechnungen der industriellen Bildsignalverarbeitung auf Multiprozessorsyteme der Grafikkarte ausgelagert und parallelisiert durchgeführt werden. Es findet eine Geschwindigkeitsoptimierung statt, die für eine durch eine hohe Maschinenleistung hervorgerufene geringe Bearbeitungszeit notwendig ist. So können Bilddaten beispielsweise in unter 0,75 s eingelesen und verarbeitet werden.

Im Gegensatz zu konventionellen Inspektionseinheiten, die korrekte Positionierung und Ausrichtung von Etiketten überprüfen, untersucht das erfindungsgemäße Inspektionsmodul über das erfindungsgemäße Verfahren zusätzlich das Druckbild auf Produktionsfehler im Druckprozess. Diese Neuerung sichert ein ganzheitlich korrekt aufgetragenes, direkt gedrucktes Etikett. Die Direktdrucktechnik ermöglicht einen Layoutwechsel von Objekt zu Objekt. Eine Inspektionseinheit kann eingelesene Druckbilder zu ihren Quelldateien referenzieren.

## Patentansprüche

1. Verfahren zur Inspektion von Behältern, wobei Bilddaten eines zu inspizierenden Behälters als IST-Bilder (B) mittels mindestens einer optischen Erfassungseinheit einer Inspektionseinheit (4) erfasst und an eine Auswerte- und Steuereinheit des Inspektionsmoduls (3) geleitet werden, welche die IST-Bilder (B) mit SOLL-Bildern (A) vergleicht, wobei die Auswerte- und Steuereinheit mindestens einen Hauptprozessor (9) und mindestens eine Graphikkarte (12) umfasst,
wobei ein Vergleich von IST- mit SOLL-Bildern auf der mindestens einen Graphikkarte (12) erfolgt und zum Vergleich gehörende Berechnungen durch mindestens zwei Graphikprozessoren der Graphikkarte (12) parallelisiert erfolgen und die Graphikkarte (12) die ausgewerteten Daten an den mindestens einen Hauptprozessor (9) leitet, **dadurch gekennzeichnet, dass** IST-Bilder und SOLL-Bilder angeglichen sowie zweidimensional gestreckt, gestaucht, verschoben, entzerrt, verzerrt, und anschließend überlagert werden.

2. Verfahren nach Anspruch 1, bei dem der Vergleich von IST- mit SOLL-Bildern auf der mindestens einen Graphikkarte (12) erfolgt und zum Vergleich gehörende Berechnungen durch mindestens 100, insbesondere über 500, idealerweise über 1.000 Graphikprozessoren der Graphikkarte (12) parallelisiert erfolgen.

3. Verfahren nach Anspruch 1 oder 2, bei dem Farbwerte von IST-Bildern ermittelt und durch die Auswerte- und Steuereinheit angelernt werden und eine Umrechnung von SOLL-Farbwerten zu IST-Farbwerten erfolgt.

4. Verfahren nach einem der Ansprüche 1 bis 3, bei dem Farbtonverarbeitung auf IST- und SOLL- Bildern zur Farbversatzdetektion angewandt wird.

5. Verfahren nach einem der Ansprüche 1 bis 4, bei dem die IST-Bilder und SOLL-Bilder als Gitter aufgeteilt werden und ein oder mehrere Rasterelemente des IST-Bildes von jeweils einem der mindestens zwei Graphikprozessoren der Graphikkarte (12) mit dem oder den analogen Rasterelementen des SOLL-Bildes verglichen werden.

6. Vorrichtung zur Inspektion von Behältern, die mindestens ein Speichermodul für SOLL-Bilder, mindestens eine optische Erfassungseinheit zur Erzeugung von IST-Bildern mindestens eines zu inspizierenden Behälters, eine Auswerte- und Steuereinheit umfasst, wobei die Auswerte- und Steuereinheit mindestens einen Hauptprozessor (9) und mindestens eine Graphikkarte (12) umfasst, wobei die mindestens eine Graphikkarte (12) mindestens zwei Graphikprozessoren umfasst und Graphikkartenprogrammierung zur Auslagerung von zu einem Vergleich von IST- mit SOLL-Bildern gehörenden Berechnungen auf die mindestens zwei Graphikprozessoren unterstützt, **dadurch gekennzeichnet, dass** IST-Bilder (B) und SOLL-Bilder (A) angeglichen sowie zweidimensional gestreckt, gestaucht, verschoben, entzerrt, verzerrt, und anschließend überlagert werden.

7. Vorrichtung nach Anspruch 6, bel der die mindestens eine optische Erfassungseinheit eine optische Kamera ist.

8. Vorrichtung nach Anspruch 7, bei der die mindestens eine optische Kamera eine Zeilenkamera (8) ist.

9. Vorrichtung nach einem der Ansprüche 6 bis 8, bei der die Auswerte- und Steuereinheit mehrere optische Erfassungseinheiten gleichzeitig bedient.

10. Vorrichtung nach einem der Ansprüche 6 bis 9, die mindestens eine Bildfangschaltung (Framegrabber) zur Kameraansteuerung (Datenakqulse und Vorverarbeitung von Daten) von der mindestens einen optischen Erfassungseinheit umfasst.

11. Vorrichtung nach einem der Ansprüche 6 bis 10 , bei der der mindestens eine zu inspizierende Behälter mit einem zu untersuchenden Merkmal einen Verfahrweg durchläuft, der dem Verfahrweg zur Erzeugung des zu untersuchenden Merkmals gleicht.

12. Vorrichtung nach einem der Ansprüche 6 bis 11, bei der die mindestens eine optische Erfassungseinheit und eine Bewegung des mindestens einen zu inspizierenden Behälters in der Vorrichtung synchronisiert sind.

13. Computerprogrammprodukt mit Programmcodemitteln, die auf einem computerlesbaren Datenträger gespeichert sind, um alle Schritte eines Verfahrens nach den Ansprüchen 1 bis 5 durchzuführen, wenn das Computerprogramm auf einem Computer oder einer entsprechenden Recheneinheit ausgeführt wird.

14. Verwendung eines Verfahrens nach einem der Ansprüche 1 bis 5, bei dem die direkte Bedruckung eines Behälters im direkten Anschluss an den Bedruckungsprozess überprüft wird.

## Claims

1. Method for the inspection of containers whereby image data of a container to be inspected are recorded as ACTUAL images (B) by way of at least one optical recording unit of an inspection unit (4) and passed to an evaluation and control unit of the inspection module (3) which compares the ACTUAL images (B) with DESIRED images (A),
whereby the evaluation and control unit comprises at least one main processor (9) and at least one graphics card (12),
whereby a comparison of ACTUAL with DESIRED images is effected on the at least one graphics card (12) and calculations associated with the comparison are effected in parallel by at least two graphic processors of the graphics card (12) and the graphics card (12) passes the evaluated data to the at least one main processor (9), **characterised in that** ACTUAL images and DESIRED images are aligned and two-dimensionally stretched, compressed, displaced, equalised, distorted and subsequently superimposed.

2. Method of claim 1 in which the comparison of ACTUAL with DESIRED images is effected on the at least one graphics card (12) and calculations associated with the comparison are effected in parallel by at least 100, in particular by 500, ideally by 1,000 graphics processors of the graphics card (12).

3. Method of claim 1 or 2 wherein colour values of ACTUAL images are determined and learned by the evaluation and control unit and a conversion from DESIRED colour values to ACTUAL colour values is effected.

4. Method of any one of claims 1 to 3 wherein hue processing is applied to ACTUAL and DESIRED images for colour offset detection.

5. Method of any one of claims 1 to 4 wherein the ACTUAL images and DESIRED images are divided up as a grid and one or more grid elements of the ACTUAL image each from one of the at least two graphics processors of the graphics card (12) are compared with the analogue grid element or elements of the DESIRED image.

6. Device for the inspection of containers which comprises at least one storage module for DESIRED images, at least one optical recording unit for generating ACTUAL images of at least one container that is to be inspected, an evaluation and control unit, with the evaluation and control unit comprising at least one main processor (9) and at least one graphics card (12), wherein the at least one graphics card (12) comprises at least two graphics processors and supports graphics card programming for the swapping out of calculations associated with a comparison of ACTUAL with DESIRED images to the at least two graphics processors, **characterised in that** ACTUAL images (B) and DESIRED images (A) are aligned and two-dimensionally stretched, compressed, displaced, equalised, distorted and subsequently superimposed.

7. Device of claim 6 wherein the at least one optical recording unit is an optical camera.

8. Device of claim 7 wherein the at least one optical camera is a line camera (8).

9. Device of any one of claims 6 to 8 wherein the evaluation and control unit serves a plurality of optical recording units simultaneously.

10. Device of any one of claims 6 to 9 which comprises at least one frame grabber for camera triggering (data acquisition and preprocessing of data) of the at least one optical recording unit.

11. Device of any one of claims 6 to 10 wherein the at least one container that is to be inspected having a feature that is to be inspected runs through a traverse path which resembles the traverse path for generating the feature that is to be inspected.

12. Device of any one of claims 6 to 11 wherein the at least one optical recording unit and a movement of the at least one container that is to be inspected are synchronised in the device.

13. Computer programme product having programme code means which are stored on a computer-readable data medium in order to execute all steps of a method according to claims 1 to 5 when the computer programme is executed on a computer or corresponding central processing unit.

14. Use of a method of any one of claims 1 to 5 in which the direct printing of a container is inspected immediately following the printing process.

## Revendications

1. Procédé d'inspection de récipients, dans lequel des données d'image d'un récipient à inspecter sont détectées en tant qu'images RÉEL (B) au moyen d'au moins une unité de détection optique d'une unité d'inspection (4) et envoyées à une unité d'évaluation et de commande du module d'inspection (3), laquelle compare les images RÉEL (B) avec les images CONSIGNE (A),
dans lequel l'unité d'évaluation et de commande comprend au moins un processeur principal (9) et au moins une carte graphique (12),
dans lequel une comparaison des images RÉEL avec des images CONSIGNE a lieu sur l'au moins une carte graphique (12) et des calculs rattachés à la comparaison sont effectués en parallèle par au moins deux processeurs graphiques de la carte graphique (12) et la carte graphique (12) envoie les données évaluées à l'au moins un processeur principal (9), **caractérisé en ce que**
des images RÉEL et des images CONSIGNE sont alignées ainsi que de manière bidimensionnelle étirées, compressées, déplacées, égalisées, déformées, et ensuite superposées.

2. Procédé selon la revendication 1, dans lequel la comparaison d'images RÉEL et d'images CONSIGNE a lieu sur l'au moins une carte graphique (12) et des calculs rattachés à la comparaison sont effectués en parallèle par au moins 100, en particulier plus de 500, idéalement plus de 1000 processeurs graphiques de la carte graphique (12).

3. Procédé selon la revendication 1 ou 2, dans lequel des valeurs de couleur d'images RÉEL sont déterminées et apprises par l'unité d'évaluation et de commande et une conversion de valeurs de couleur CONSIGNE en valeurs de couleur RÉEL a lieu.

4. Procédé selon l'une quelconque des revendications 1 à 3, dans lequel un traitement de ton sur les images RÉEL et CONSIGNE est appliqué pour la détection de dérive de couleur.

5. Procédé selon l'une quelconque des revendications 1 à 4, dans lequel les images RÉEL et CONSIGNE sont divisées en tant que grille et un ou plusieurs éléments de trame de l'image RÉEL sont comparés avec le ou les éléments de trame analogues de l'image de CONSIGNE par respectivement un des au moins deux processeurs graphiques de la carte graphique (12).

6. Dispositif d'inspection de récipients, qui comprend au moins un module de mémoire pour des images CONSIGNE, au moins une unité de détection optique pour la génération d'images RÉEL d'au moins un récipient à inspecter, une unité d'évaluation et de commande, dans lequel l'unité d'évaluation et de commande comprend au moins un processeur principal (9) et au moins une carte graphique (12), dans lequel l'au moins une carte graphique (12) comprend au moins deux processeurs graphiques et supporte une programmation de carte graphique pour le transfert de calculs rattachés à une comparaison d'images RÉEL avec des images CONSIGNE, **caractérisé en ce que**
des images RÉEL (B) et des images CONSIGNE (A) sont alignées ainsi que de manière bidimensionnelle étirées, compressées, déplacées, égalisées, déformées, et ensuite superposées.

7. Dispositif selon la revendication 6, dans lequel l'au moins une unité de détection optique est une caméra optique.

8. Dispositif selon la revendication 7, dans lequel l'au moins une caméra optique est une caméra linéaire (8).

9. Dispositif selon l'une quelconque des revendications 6 à 8, dans lequel l'unité d'évaluation et de commande manoeuvre plusieurs unités de détection optiques.

10. Dispositif selon l'une quelconque des revendications 6 à 9, qui comprend au moins un dispositif d'acquisition d'image (carte d'acquisition) pour la commande de la caméra (acquisition de données et prétraitement de données) de l'au moins une unité de détection optique.

11. Dispositif selon l'une quelconque des revendications 6 à 10, dans lequel l'au moins un récipient à inspecter avec une caractéristique à examiner parcourt un trajet qui est égal au trajet de génération de la caractéristique à examiner.

12. Dispositif selon l'une quelconque des revendications 6 à 11, dans lequel l'au moins une unité de détection optique et un déplacement de l'au moins un récipient à inspecter sont synchronisés dans le dispositif.

13. Produit de programme informatique avec des moyens de code de programme, qui sont enregistrés sur un support de données lisible par ordinateur pour effectuer toutes les étapes d'un procédé selon les revendications 1 à 5, lorsque le programme informatique est exécuté sur un ordinateur ou une unité de calcul correspondante.

14. Utilisation d'un procédé selon l'une quelconque des revendications 1 à 5, dans lequel l'impression directe d'un récipient est contrôlée immédiatement après le processus d'impression.
